# EUROPÄISCHE PATENTANMELDUNG

(11) **EP 2 954 782 A1**
(43) Veröffentlichungstag der Anmeldung: **16.12.2015**
(21) Anmeldenummer: 15171408.6
(22) Anmeldetag: 10.06.2015
(51) Int. Cl.: A21D 17/00, A23L 1/00

(54) **VERFAHREN UND VORRICHTUNG ZUR AUFBEREITUNG VON DEHYDRIERTEN BACKWAREN**

(30) Priorität: 12.06.2014 DE 102014008779
(71) Anmelder: Fürbas, Roland, 5010 Salzburg (AT)
(72) Erfinder: Fürbas, Roland, 5010 Salzburg (AT)
(74) Vertreter: Vossius & Partner Patentanwälte Rechtsanwälte mbB

(57) **Zusammenfassung**

Die vorliegende Erfindung betrifft ein Verfahren sowie eine Vorrichtung zur Aufbereitung von dehydrierten Backwaren.

## Beschreibung

Die vorliegende Erfindung betrifft ein Verfahren zur Aufbereitung von dehydrierten Backwaren sowie eine Vorrichtung zur Aufbereitung von dehydrierten Backwaren.

Werden Backwaren wie Brot, Brötchen, Kuchen und dergleichen länger gelagert, so dehydrieren diese bzw. trocknen aus, d h. den Backwaren wird die darin enthaltende Feuchtigkeit in großem Maße durch Verdunstung entzogen. Je nach Art, Beschaffenheit und Größe der Backwaren sind diese bereits nach wenigen Stunden, jedenfalls aber einige Tage nach der Herstellung, nicht mehr verzehrfähig oder verkaufbar. Der Austrocknung an der offenen Luft kann zwar dadurch begegnet werden, dass die Backwaren luftdicht gelagert werden, z. B. in einer verschließbaren Box oder einer Plastiktüte, jedoch verlieren die meisten Backwaren dadurch ihre ursprüngliche Konsistenz und werden z. B. weich oder auf andere Weise unappetitlich. Zudem erhöht das luftdichte Verschließen von Feuchtigkeit enthaltenen Backwaren die Wahrscheinlichkeit der Schimmelbildung, sodass die Ware ebenfalls verderben kann. Aus diesen Gründen werden derzeit in Europa über 25 % aller produzierten Backwaren vernichtet, da diese entweder nicht mehr verkauft werden können oder aber vom Kunden für nicht mehr verzehrfähig erachtet werden.

Es ist daher eine Aufgabe der vorliegenden Erfindung, ein Verfahren sowie eine Vorrichtung bereitzustellen, mit dem bzw. der dehydrierte Backwaren soweit wieder aufbereitet werden können, dass sie wieder verkaufsfähig bzw. verzehrfähig werden. Diese Aufgabe wird mit dem Verfahren gemäß Anspruch 1 sowie der Vorrichtung gemäß Anspruch 10 gelöst. Bevorzugte Ausgestaltungen des erfindungsgemäßen Verfahrens bzw. der erfindungsgemäßen Vorrichtung sind in den abhängigen Ansprüchen beschrieben.

Demnach weist das erfindungsgemäße Verfahren zur Aufbereitung von dehydrierten Backwaren die folgenden Verfahrensschritte auf: Eine oder mehrere dehydrierte Backwaren werden zunächst in das Innere eines Druckbehälters eingebracht und der Druckbehälter wird mit den darin befindlichen dehydrierten Backwaren luftdicht verschlossen. In das Innere des Druckbehälters wird dann Wasserdampf eingebracht und/oder im Inneren des Druckbehälters wird Wasserdampf erzeugt. Der Wasserdampf hat bevorzugt eine Temperatur von mindestens 100 °C bis maximal 120 °C. Gleichzeitig und/oder anschließend wird ein Druck von mindestens 1,2 bar bis maximal 1,8 bar im Inneren des Druckbehälters erzeugt, so dass der Wasserdampf über einen ersten Zeitraum unter Überdruck auf die dehydrierte(n) Backware(n) einwirken kann.

Die Erfindung basiert u. a. auf dem Gedanken, die verdunstete Feuchtigkeit wieder in die Backware zurückzuführen, wobei das Einwirken von Wasserdampf unter Überdruck auf die dehydrierte Backware vorteilhaft dazu beiträgt, dass das Wasser gleichmäßig in die gesamte Backware eingebracht wird und nicht etwa lediglich die Oberfläche befeuchtet wird.

Das erfindungsgemäße Verfahren lässt sich zur Aufbereitung von Backwaren jeglicher Art, insbesondere von Brot, Brötchen, Kuchen usw. verwenden. Unter einer dehydrierten Backware wird im Kontext der vorliegenden Erfindung eine Backware verstanden, die gegenüber demjenigen Zustand direkt nach der Herstellung bzw. dem für den Verzehr gedachten Zustand substanziell an Wasser verloren hat. Bevorzugt sind mindestens 10 %, stärker bevorzugt mindestens 15 % und noch stärker bevorzugt mindestens 20 %, der nach der Herstellung der Backware vorhandenen Flüssigkeit aus der Backware verdunstet.

Als Druckbehälter eignet sich jeglicher Behälter, dessen Innenraum dazu geeignet ist, eine Backware aufzunehmen, und der einem Druck von mindestens 1,2 bar standhält. Das luftdichte Verschließen soll derart erfolgen, dass ein Druck von mindestens 1,2 bar, vorzugsweise mindestens 1,4 bar, jedoch maximal 1,8 bar im Inneren des Druckbehälters erzeugt werden kann, und schließt das Vorliegen z. B. eines Überdruckventils nicht aus.

Wird der Wasserdampf in das Innere des Druckbehälters eingebracht, so wird der Wasserdampf bevorzugt mit einer hierfür geeigneten Vorrichtung, die Teil des Druckbehälters oder eine separate Vorrichtung sein kann, erzeugt, und mittels einer Verbindung zum Inneren des Druckbehälters in diesen eingebracht. Alternativ oder zusätzlich kann Wasserdampf im Inneren des Druckbehälters erzeugt werden. Dies ist beispielsweise auf einfache Weise möglich, indem ein bestimmtes Wasservolumen im Inneren des Druckbehälters bereitgestellt und auf Siedetemperatur erhitzt wird. Besonders bevorzugt weist der Druckbehälter einen beheizbaren Boden auf, mittels dessen auf dem Boden vorhandenes oder bereitgestelltes Wasser erhitzt und verdampft werden kann.

Der gewünschte Zieldruck im Inneren des Druckbehälters kann mittels geeigneter Pumpen erzeugt werden. Besonders bevorzugt stellt sich der Zieldruck jedoch durch Verdampfen von im Inneren des Druckbehälters befindlichen Wassers ein. Der Druck kann dabei dadurch eingestellt werden, dass eine geeignete Wassermenge unter Berücksichtigung des Volumens des Innenraums des Druckbehälters sowie der dehydrierten Backware ermittelt und in das Innere des Druckbehälters eingebracht wird. Besonders bevorzugt wird ein Wasserüberschuss in das Innere des Druckbehälters eingebracht, sodass das Verdampfen des Wassers einen Druck generieren würde, der jenseits des gewünschten Zieldruckes liegt, und der Zieldruck mithilfe eines Überdruckventils geregelt. Dabei wird bevorzugt der Druck im Druckbehälter zusätzlich durch eine Temperatursteuerung geregelt, um zu verhindern, dass der Dampf in großem Maße aus dem Druckbehälter entweicht.

Da das Einwirken von Wasserdampf auf die dehydrierte Backware dazu führen kann, dass die Backware aufweicht, umfasst das erfindungsgemäße Verfahren bevorzugt einen weiteren Aufbackschritt der Backware über einen zweiten Zeitraum. Dieses Aufbacken kann entweder in einem separaten Gerät, beispielsweise einem Backofen, oder aber im Inneren des Druckbehälters erfolgen. Entsprechend der ersten Alternative wird die Backware bevorzugt nach der Wasserdampfbehandlung in einen Backofen eingebracht und bei einer Temperatur von mindestens 100 °C, bevorzugt mindestens 140 °C oder 150 °C, und von höchstens 240 °C, bevorzugt höchstens 220 °C oder 200 °C, und einer relativen Luftfeuchtigkeit von höchstens 5 %, bevorzugt höchstens 4 % oder 3 %, gebacken. Dies ist besonders bevorzugt, wenn es sich um die Anwendung im Heimbedarf handelt, da dadurch bereits auf im Haushalt vorhandene Geräte zugegriffen werden kann.

Gemäß der zweiten Alternative wird bevorzugt die relative Luftfeuchtigkeit im Inneren des Druckbehälters auf höchstens 5 %, bevorzugt höchstens 4 % oder 3 %, reduziert und die Backware bei einer Temperatur von mindestens 100 °C, bevorzugt mindestens 140 °C oder 150 °C, und von höchstens 240 °C, bevorzugt höchstens 220 °C oder 200 °C, gebacken.

In beiden Alternativen beträgt die Temperatur während des Backens bzw. Aufbackens, sehr stark abhängig von der eingebrachten Backware, respektive der verwendeten Teigsorte, besonders bevorzugt mindestens 160 °C, maximal jedoch höchstens 220 °C und/oder die relative Luftfeuchtigkeit während des Backens bzw. Aufbackens besonders bevorzugt höchstens 2 %.

Mithilfe des zusätzlichen Aufbackschritts ist es möglich, bei einigen Backwaren die ursprünglich vorhandene krosse Kruste so wieder herzustellen, wie diese direkt nach der Herstellung der Backware vorlag. Ein Brot oder Brötchen vom Vortag ist nach dem erfindungsgemäßen Befeuchten und Aufbacken im Hinblick auf Geschmack, Form, Textur und Konsistenz im Wesentlichen identisch zur frisch gebackenen Backware. Bevorzugt werden die Parameter beim Aufbackschritt so gewählt, dass die Kruste ihren Ursprungszustand zurückerhält, ohne dabei die Kruste zu verbrennen oder übermäßig zu bräunen.

Im Falle eines saftigen Kuchens können andererseits bessere Ergebnisse erzielt werden, wenn das zusätzliche Aufbacken nicht erfolgt. Tatsächlich lässt sich im Falle eines solchen saftigen Kuchens sogar die Qualität des frisch gebackenen Kuchens verbessern, indem dieser nachbefeuchtet wird, was seine Konsistenz und seinen Geschmack verbessern kann. Darüber hinaus lassen sich durch das erfindungsgemäße Verfahren auch zusätzliche Aromastoffe in die Backware einbringen, indem der Wasserdampf im Inneren des Druckbehälters mit entsprechenden Aromen versetzt wird. Diese Aromen lassen sich so schonender in die fertige Backware einbringen. Da viele Aromen beim Backen in hohen Temperaturen zumindest teilweise vernichtet oder verändert werden, können sich so insgesamt aromatischere Backwaren erzielen lassen.

Wie bereits angedeutet wurde, hängen die verschiedenen Verfahrensparameter während des Befeuchtungsschritts sowie während des Aufbackens stark von der aufzubereitenden Backware ab. Insbesondere spielen hier der Typ der Backware (z.B. Weißbrot, Graubrot, Vollkornbrot, Schwarzbrot, Baguette, Brötchen, Croissant, etc.), der relative Wasserverlust und das Gewicht der dehydrierten Backware eine Rolle: Ein stark ausgetrocknetes Baguette ist anders zu behandeln als ein nur leicht dehydriertes Schwarzbrot, bei einem Brötchen soll unter Umständen eine krossere Kruste erzeugt werden als bei einem Graubrot, ein großer Bauernbrotlaib mit 1 kg Gewicht wird länger zu befeuchten sein als ein Brötchen mit 100 g Gewicht.

Es ist daher bevorzugt, in einem zusätzlichen Verfahrensschritt den Backwarentyp und/oder den relativen Wasserverlust (in Gewichts-%) und/oder das Gewicht der dehydrierten Backware zu bestimmen und auf Basis einer oder mehrerer dieser so bestimmten Parameter die Temperatur des Wasserdampfes und/oder den Druck im Inneren des Druckbehälters und/oder den ersten Zeitraum festzulegen. Alternativ oder zusätzlich kann das erfindungsgemäße Verfahren auch das Festlegen der Back-Temperatur und/oder des Drucks im Inneren des Druckbehälters während des Backens und/oder des zweiten Zeitraums in Abhängigkeit von dem bestimmten Backwarentyp und/oder dem relativen Wasserverlust und/oder dem Gewicht der dehydrierten Backware und/oder einem oder mehreren der für das Befeuchten festgelegten Parameter umfassen.

Das Bestimmen des Gewichts der dehydrierten Backware erfolgt dabei bevorzugt durch Wiegen der dehydrierten Backware. Das Bestimmen des relativen Wasserverlusts der dehydrierten Backware kann ebenfalls durch Wiegen der dehydrierten Backware vor und nach dem Dehydrieren erfolgen. Hierzu müsste der Benutzer die Backware nach dem Erwerb wiegen (oder das Ursprungsgewicht, das bei den meisten Brotlaiben standardisiert ist, kennen) und vor dem Wiederaufbereiten nochmals wiegen, um den relativen Gewichts- und damit Wasserverlust zu bestimmen.

Alternativ kann der relative Wasserverlust auch geschätzt werden auf Basis des Backwarentyps, des Alters der Backware und der Aufbewahrung der Backware. Hierfür könnte dem Anwender beispielsweise eine Tabelle (in real-existierender Form oder digital z.B. in Form einer Excel-Tabelle) zur Verfügung gestellt werden, aus der zu verschiedenen Backwarentypen, dem Alter und der Art der Aufbewahrung (z.B. Brotkasten, Plastiktüte, offen) relative Wasserverluste ausgelesen werden können. Alternativ könnten diese Angaben in ein Programm (beispielsweise ein in der erfindungsgemäßen Vorrichtung installiertes Programm oder eine separates Programm, (wie z.B. eine mobile oder Web-App) eingegeben werden, das die Schätzung des relativen Wasserverlustes automatisch durchführt bzw. ausgibt.

Ähnliches gilt für das Festlegen der diversen Verfahrensparameter während dem Befeuchten und/oder Aufbacken. Dieses Festlegen kann ebenfalls durch das Auslesen einer analogen und/oder digitalen Tabelle (in real-existierender Form oder z.B. in Form einer Excel-Tabelle) und/oder automatisch erfolgen. Hierfür könnte dem Anwender beispielsweise eine Tabelle zur Verfügung gestellt werden, aus der zu verschiedenen Backwarentypen, dem relativen Wasserverlust und dem Gewicht der dehydrierten Backware die Temperatur des Wasserdampfes und/oder der Druck im Inneren des Druckbehälters und/oder der erste Zeitraum ausgelesen und so festgelegt werden können. Diese Tabelle könnte der erfindungsgemäßen Vorrichtung beim Kauf beigelegt sein oder aber separat (beispielsweise online) vertrieben werden. Alternativ könnten diese Angaben in ein Programm (beispielsweise ein in der erfindungsgemäßen Vorrichtung installiertes Programm oder eine separates Programm, wie z.B. eine mobile oder Web-App) eingegeben werden, das die Festlegung der verschiedenen Verfahrensparameter automatisch durchführt. Dies kann beispielsweise dadurch erfolgen, dass die entsprechenden Tabellenwerte so hinterlegt sind, dass das Programm auf diese zugreifen kann.

Besonders bevorzugt werden dem Anwender die Verfahrenstabellen in Form von Eingabemasken - z.B. als Mobile-App oder als Web-App - elektronisch gestellt, um beispielsweise die Backware, das Ursprungsgewicht der Backware (oder die jeweiligen Anteile des Ursprungsgewichts),den jeweilig verwendeten Druck (z.B. 1,3 bar) bzw. entsprechend dem verwendeten Gerät und, falls möglich, der einstellbaren Druckstufe (z.B. I, II oder III) zu erfassen und daraus die optimale Aufbereitungsdauer, sowie die optimale Aufback-Dauer und Aufback-Temperatur für die gewählte Backwarensorte bzw. die empfohlene Druckstufe entsprechend dem verwendeten Gerät (z.B. Stufe I, II oder III) zu empfehlen, ohne ein aufwendiges Suchen in den Verfahrenstabellen erforderlich zu machen.

Bevorzugt wird im Inneren des Druckbehälters ein Druck von mindestens 1,3 bar, stärker bevorzugt von mindestens 1,4 bar, noch stärker bevorzugt von mindestens 1,5 bar erzeugt, jedoch maximal 1,8 bar. Es ist ferner bevorzugt, dass die Backware im Inneren des Druckbehälters auf einen wasserdampfdurchlässigen Gitter-Rost angeordnet ist. Auf diese Weise kann die Luftfeuchtigkeit bzw. der Wasserdampf besonders vorteilhaft von allen Seiten auf die Backware einwirken.

Die vorliegende Erfindung betrifft ferner eine Vorrichtung zur Aufbereitung von dehydrierten Backwaren, wobei die Vorrichtung bevorzugt dazu geeignet ist, die oben beschriebenen Verfahrensschritte durchzuführen. Die Vorrichtung umfasst einen Druckbehälter, der luftdicht verschlossen werden kann und ein Überdruckventil aufweist. Der Druckbehälter weist einen beheizbaren Boden, einen Spritzwasserschutz und einen Gitter-Rost zur Aufnahme einer Backware auf.

Bevorzugt wird die Vorrichtung dadurch betrieben, dass Wasser in das Innere des Druckbehälters eingebracht wird, welches mittels des beheizbaren Bodens aufgeheizt und verdampft werden kann. Der erwünschte Zieldruck wird vorzugsweise über das Überdruckventil reguliert. Der wasserdampfdurchlässige Gitter-Rost trägt dazu bei, dass der generierte Wasserdampf vorteilhaft von allen Seiten auf die auf dem Gitter-Rost liegende Backware einwirken kann. Zwischen dem Gitter-Rost und dem beheizbaren Boden befindet sich ein Spritzwasserschutz, beispielsweise in Form eines feinen Gitters, der Wasserdampf durchlässt, aber verhindert, dass Wasser vom Boden direkt auf die Backware spritzt und so zu einer inhomogenen Befeuchtung der Backware führen könnte.

Der beheizbare Boden kann entweder indirekt beheizbar sein, indem die Vorrichtung beispielsweise auf eine handelsübliche Herdplatte gestellt wird, oder ein integriertes Heizelement zum Beheizen des Bodens aufweisen. Hierfür kann der beheizbare Boden Heizwendeln und/oder Induktionsspulen aufweisen.

Bei Vorrichtungen, die über eine eigene Stromversorgung verfügen, kann eine automatische Steuerung der z.B. in den Verfahrensparametertabellen eingetragenen Parameter integriert werden. Dadurch kann über die Eingabe in ein Eingabefeld/Display
- der Backwarensorte,
- des Wasserverlustes in % und
- des Ursprungsgewichtes der Backware (oder des jeweilig anteiligen Ursprungsgewichts)
das Verfahren automatisch ablaufen. Bei Vorrichtungen, bei denen der Aufback-Prozess ebenfalls im Gerät integriert ist, kann der gesamte Prozess vollautomatisch ablaufen.

Bevorzugt betragen die maximalen Innenmaße des Druckbehälters in horizontaler Richtung, d. h. parallel zum beheizbaren Boden, mindestens 22 cm, stärker bevorzugt mindestens 30 cm und besonders bevorzugt mindestens 40 cm. Ein solcher Druckbehälter kann handelsübliche Brotlaibe mit typischen Ausmaßen aufnehmen. Gemäß einer bevorzugten Ausführungsform weist der Druckbehälter eine im Wesentlichen rechteckige Form auf. Eine solche Form des Druckbehälters ist insbesondere bevorzugt, wenn es sich um eine Vorrichtung mit einem integrierten Heizelement zum Beheizen des Bodens handelt. Alternativ kann der Druckbehälter auch eine im Wesentlichen kreisförmige oder ovale Form aufweisen. Dies ist besonders bevorzugt, wenn der beheizbare Boden passiv beheizt werden soll, d. h. wenn der Druckbehälter auf eine herkömmliche runde oder (bei Bräterzonen) ovale Herdplatte gestellt werden soll.

Da übliche Herdplatten i. d. R. rund sind und einen Durchmesser von bis zu 22 cm aufweisen und da die bevorzugten maximalen Innenmaße des Druckbehälters in horizontaler Richtung mindestens 25 cm betragen, ist es gemäß einer bevorzugten Ausführungsform der erfindungsgemäßen Vorrichtung vorgesehen, dass sich der Druckbehälter nach oben hin aufweitet. Mit anderen Worten hat der beheizbare Boden des Druckbehälters bevorzugt im Wesentlichen die Maße einer typischen Herdplatte, d. h. beispielsweise eine kreisrunde Form mit einem Durchmesser von 22 cm, bzw. weniger als 22 cm. Ein oberer Abschnitt der Vorrichtung und vorzugsweise ein wesentlicher Teil des Druckbehälters hat jedoch bevorzugt wesentlich größere Ausmaße, sodass der Druckbehälter handelsübliche Brotlaibe aufnehmen kann. Die Aufweitung nach oben hin kann dabei in einer oder mehreren Stufen oder kontinuierlich erfolgen. Alternativ haben Herdplatten mit Bräterzonen ovale Abmessungen von ca. 18 cm x 27 cm. Entsprechend kann der Druckbehälter auch dieser Form entsprechend einen ovalen Boden aufweisen, wobei sich auch hier der Druckbehälter nach oben hin aufweiten kann.

Bevorzugt sind die maximalen Innenmaße des Druckbehälters in horizontaler Richtung, d. h. parallel zum beheizbaren Boden, mindestens 20 %, stärker bevorzugt mindestens 30 % und besonders bevorzugt mindestens 50 % größer als die maximalen Ausmaße des beheizbaren Bodens.

Die besonders bevorzugte Ausführungsform mit dem sich nach oben hin aufweitenden Druckbehälter hat mehrere Vorteile. Da die Maße des beheizbaren Bodens im Wesentlichen denjenigen einer handelsüblichen Herdplatte entsprechen, kann die über dem Boden befindliche Wassermenge besonders effizient erhitzt werden. Gleichzeitig erlaubt der aufgeweitete obere Bereich des Druckbehälters die Aufnahme relativ großer Backwaren, wie z. B. ganzer Brotlaibe. Zudem minimiert diese Konstruktion effektiv Totvolumen, in dem sich keine Backware befindet, das aber mit Wasserdampf gefüllt werden muss.

Bevorzugte Ausführungsformen der vorliegenden Erfindung werden nachfolgend mit Bezug auf die Figuren näher beschrieben. Es zeigen:
- Figur 1: eine schematische Querschnittansicht einer erfindungsgemäßen Vorrichtung zur Aufbereitung von dehydrierten Backwaren gemäß einer bevorzugten Ausführungsform;
- Figur 2: eine schematische Querschnittansicht einer erfindungsgemäßen Vorrichtung zur Aufbereitung von dehydrierten Backwaren gemäß einer weiteren bevorzugten Ausführungsform;
- Figur 3: eine schematische Querschnittansicht einer erfindungsgemäßen Vorrichtung zur Aufbereitung von dehydrierten Backwaren gemäß einer weiteren bevorzugten Ausführungsform;
- Figur 4: eine schematische Teilschnittansicht einer erfindungsgemäßen Vorrichtung zur Aufbereitung von dehydrierten Backwaren gemäß einer weiteren bevorzugten Ausführungsform;
- Figur 5: eine schematische Teilschnittansicht einer erfindungsgemäßen Vorrichtung zur Aufbereitung von dehydrierten Backwaren gemäß einer weiteren bevorzugten Ausführungsform; und
- Figur 6: eine schematische Teilschnittansicht einer erfindungsgemäßen Vorrichtung zur Aufbereitung von dehydrierten Backwaren gemäß einer weiteren bevorzugten Ausführungsform.
- Figur 7: zwei Beispiele von schematischen Draufsichten für Gitter-Roste für die erfindungsgemäßen Vorrichtungen zur Aufbereitung von dehydrierten Backwaren gemäß einer weiteren bevorzugten Ausführungsform.

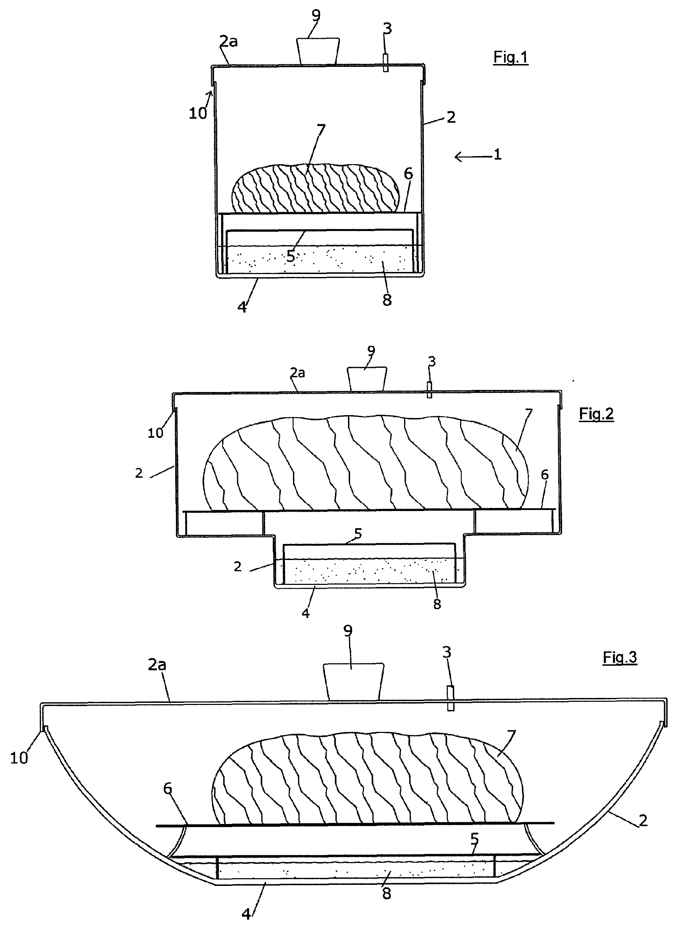

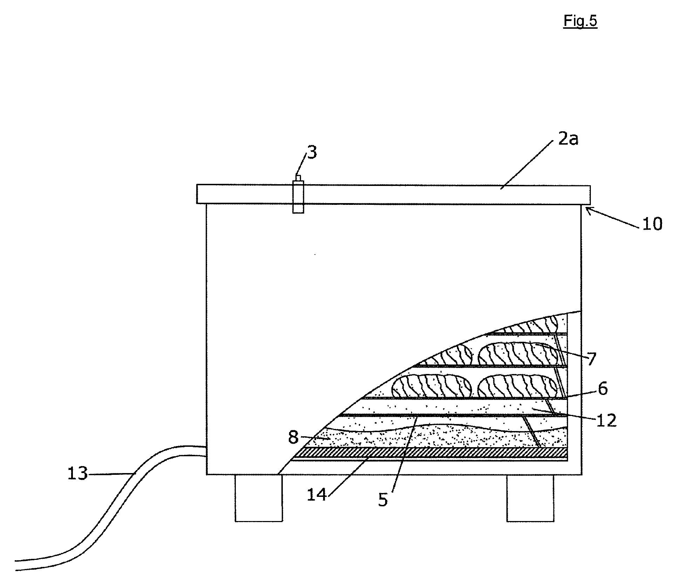

In Figur 1 ist schematisch eine bevorzugte Ausführungsform der erfindungsgemäßen Vorrichtung zur Aufbereitung von dehydrierten Backwaren in einer Querschnittansicht gezeigt. Die Vorrichtung weist einen Druckbehälter 2 auf, der mittels eines Deckels 2a luftdicht verschlossen werden kann und ein Überdruckventil 3 aufweist. Das luftdichte Verschließen erfolgt über eine nicht weiter dargestellte Form und Dichtung 10 zwischen dem Deckel 2a und dem restlichen Druckbehälter 2. Der Deckel 2a des Druckbehälters 2 kann einen Griff 9 in unterschiedlichen Formen und Mechanismen aufweisen. Der beheizbare Boden 4 dieser Ausführungsform ist beispielsweise kreisrund mit einem Durchmesser von bevorzugt 22 cm ausgebildet, so dass sich dieser mittels einer herkömmlichen Herdplatte aufheizen lässt. In Abhängigkeit von Form und Größe der Herdplatte sind auch andere Bodengeometrien möglich. Insbesondere lassen sich bei der Verwendung eines Gas-Herdes größere und anders geformte Böden verwenden. Der Druckbehälter 2 weist ferner einen Spritzwasserschutz 5 und einen Gitter-Rost 6 zur Aufnahme einer oder mehreren Backwaren 7 auf. Je nach Höhe können auch mehrere Gitter-Rost-Ebenen übereinander gestapelt werden (wie z.B. in Figur 5 dargestellt).

Die Vorrichtung 1 bzw. der Druckbehälter 2 samt Deckel 2a kann beispielsweise kreisrund, oval, rechteckig oder quadratisch ausgeführt sein. Soll der beheizbare Boden 4 indirekt über eine Heizplatte erhitzt werden, ist eine im Wesentlichen runde oder ovale Form (in Abhängigkeit von der Form der Herdplatte) der Vorrichtung oder zumindest des beheizbaren Bodens 4 besonders vorteilhaft. Zur Ausführung des erfindungsgemäßen Verfahrens kann eine vorbestimmte Wassermenge 8 in den Druckbehälter 2 eingefüllt werden, sodass diese bevorzugt den beheizbaren Boden 4 des Druckbehälters 2 bedeckt. Der Gitter-Rost 6 ist dazu geeignet, eine Backware 7 zu tragen bzw. zu halten, wobei der Gitter-Rost 6 auf einer Höhe innerhalb des Druckbehälters 2 angeordnet ist, die über der üblichen Füllmenge mit Wasser 8 liegt. Der Gitter-Rost 6 hat bevorzugt möglichst dünne Streben oder Drähte, um möglichst wenig der Oberfläche der Backware 7 abzudecken, sodass die Oberfläche der Backware 7 möglichst gleichmäßig und homogen dem Wasserdampf unter Druck ausgesetzt ist.

Dieser Wasserdampf wird bevorzugt dadurch gebildet, dass das Wasser 8 mithilfe des beheizbaren Bodens 4 über den Siedepunkt erhitzt wird, sodass dieses verdampft und den gesamten Innenraum des Druckbehälters 2 mit Wasserdampf ausfüllt. Ein gewünschter Druck wird dabei bevorzugt dadurch eingestellt, dass ein Überdruckventil 3 Wasserdampf entweichen lässt, sobald der gewünschte Druck überschritten wird. Optional kann der gewünschte Druck auch über die Temperatur zusätzlich geregelt werden, so dass verhindert werden kann, dass der Dampf in großem Maße aus dem Druckbehälter entweicht. Die Temperatur wird hierfür derart geregelt, dass gerade genügend Wasser verdampft, um den gewünschten Druck zu erzielen, der bevorzugt kleiner ist als derjenige Druck, der das Überdruckventil öffnet. Bevorzugt weist die Vorrichtung hierfür einen Temperatur- und/oder Drucksensor sowie einen entsprechenden Regelkreislauf auf. Erfolgt das Erhitzen passiv über eine Herdplatte, so kann das Überdruckventil auch als Druckanzeige dienen, die dem Anwender indirekt anzeigt, auf welcher Stufe der Herd zu regeln ist, um den gewünschten Zieldruck zu erreichen.

Um zu verhindern, dass siedendes Wasser 8 an die Backware 7 spritzt, ist ein Spritzschutz 5 zwischen dem Gitter-Rost 6 und dem beheizbaren Boden 4 vorgesehen. Dieser Spritzschutz 5 kann beispielsweise ein feines Sieb aufweisen, das durchlässig für Wasserdampf ist, jedoch spritzende Wassertropfen aufhält. Der Gitter-Rost 6 und/oder der Spritzschutz 5 sind bevorzugt nicht fix in dem Druckbehälter 2 installiert, sondern können leicht entnommen werden.

Eine weitere bevorzugte Ausführungsform der erfindungsgemäßen Vorrichtung zur Aufbereitung von dehydrierten Backwaren ist in Figur 2 schematisch dargestellt. Bei dieser Ausführungsform weitet sich der Druckbehälter ausgehend vom beheizbaren Boden 4 nach oben hin auf, sodass die Innenmaße des Druckbehälters eines oberen Abschnitts 2c deutlich größer sind als die maximalen Ausmaße des beheizbaren Bodens 4. Letzterer ist bevorzugt derart geformt und bemaßt, dass er auf eine handelsübliche Herdplatte gestellt werden kann. Der obere Abschnitt 2c ist dahingegen bevorzugt derart bemaßt, dass er einen ganzen Brotlaib 7 aufnehmen kann.

Die Aufweitung des Druckbehälters 2 kann über eine Stufe (wie in Figur 2 dargestellt), über mehrere Stufen (nicht dargestellt) oder aber kontinuierlich (wie in Figur 3 dargestellt) erfolgen.

Eine weitere bevorzugte Ausführungsform der erfindungsgemäßen Vorrichtung zur Aufbereitung von dehydrierten Backwaren ist in Figur 5 schematisch dargestellt. Diese Ausführungsform ähnelt derjenigen der Figur 1, wobei hier in den Boden des Druckbehälters ein Heizelement 14 integriert ist, welches sich über ein Stromkabel 13 mit Energie versorgen lässt. Das Heizelement 14, das beispielsweise Heizwendeln aufweisen kann, erhitzt das Wasser 8, welches dadurch Dampf 12 generiert, der durch den Spritzschutz 5 und den Gitter-Rost 6 hindurch auf die Backware 7 einwirken kann, wobei der druckdichte Verschluss 10 dafür sorgt, dass der Dampf nicht aus dem Druckbehälter entweichen kann, solange das Überdruckventil 3 geschlossen bleibt.

Auch wenn bei der in Figur 5 dargestellten bevorzugten Ausführungsform der erfindungsgemäßen Vorrichtung zur Aufbereitung von dehydrierten Backwaren das Heizelement 14 in den Boden des Druckbehälters integriert ist, kann alternativ oder zusätzlich ein Heizelement an anderen Stellen der Vorrichtung vorgesehen sein. So könnte das Heizelement 14 auch in der seitlichen Wandung des Druckbehälters und/oder im Deckel angebracht sein. Dabei kann das Heizelement 14 auf der Innenseite der Wandung, auf der Außenseite der Wandung oder innerhalb der Wandung angeordnet sein. Beispielsweise könnte die Innenseite der Wandung (oder ein Teil derselben) und/oder der Boden des Druckbehälters mit einer Heizfolie ausgekleidet sein. Alternativ oder zusätzlich könnten eine oder mehrere Heizwendeln an oder innerhalb der Wandung und/oder an oder innerhalb des Bodens vorgesehen sein.

Ausführungsformen mit einem (zusätzlichen) Heizelement an bzw. in der Wandung sind besonders vorteilhaft, da sie es ermöglichen, dass der gesamte Ablauf inklusive Aufback-Prozess ohne Entnahme der Backware vollautomatisch erfolgen kann. Hierbei ist im Prozess bevorzugt zu beachten, dass vor dem Aufbackschritt zuerst ggf. der Dampf und das überschüssige Wasser zu entlassen ist, um die erforderlich niedrige relative Luftfeuchte zu erreichen.

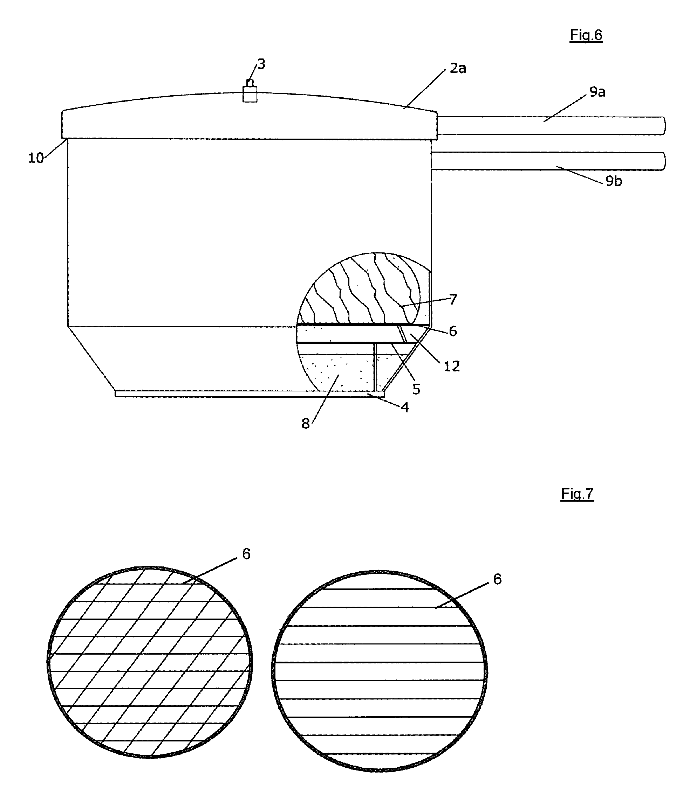

Eine weitere bevorzugte Ausführungsform der erfindungsgemäßen Vorrichtung zur Aufbereitung von dehydrierten Backwaren, die sich jedoch passiv beheizen lässt, ist in Figur 6 schematisch dargestellt. Der Boden 4 dieser Ausführungsform ist beispielsweise kreisrund mit einem Durchmesser von bevorzugt 22 cm ausgebildet, so dass sich dieser mittels einer herkömmlichen Herdplatte aufheizen lässt. Natürlich sind in Abhängigkeit von Form und Größe der Herdplatte auch andere Bodengeometrien möglich. Ähnlich wie bei den Ausführungsformen der Figuren 2 und 3 weitet sich auch hier der Druckbehälter ausgehend vom beheizbaren Boden 4 nach oben hin auf, sodass die Innenmaße des Druckbehälters eines oberen Abschnitts deutlich größer sind als die maximalen Ausmaße des beheizbaren Bodens 4. Der obere Abschnitt hat dabei bevorzugt konstante Ausmaße und bildet beispielsweise einen Zylinder. Bevorzugt ist der Gitter-Rost 6 etwa auf Höhe des unteren Endes des Zylinders angeordnet.

Der Griff wird bei dieser Ausführungsform durch zwei Griffabschnitte 9a und 9b gebildet, von denen einer am Deckel 2a und einer am Druckbehälter befestigt ist. Bevorzugt können die beiden Griffabschnitte miteinander in Eingriff treten, um den Druckbehälter luftdicht zu verschließen.

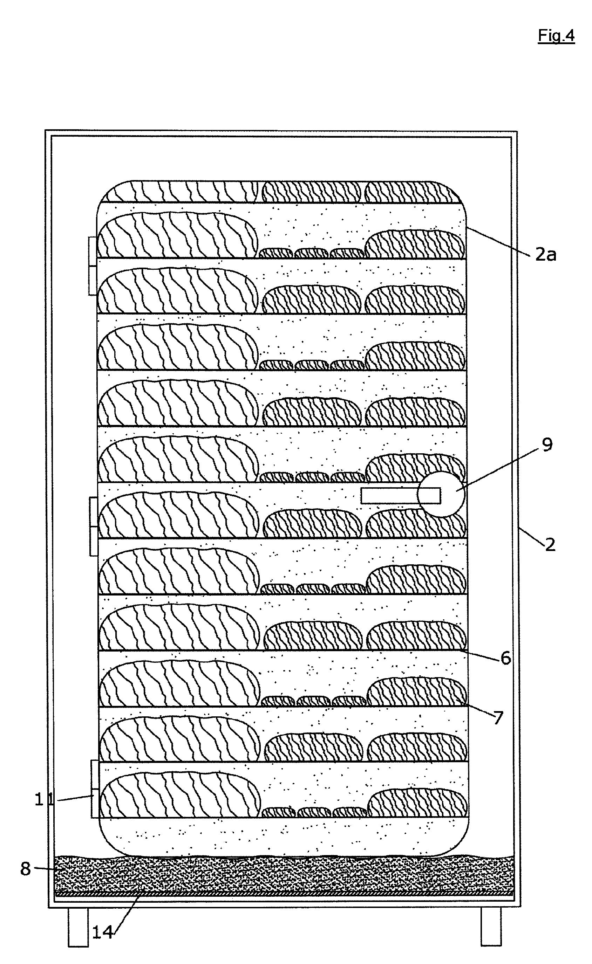

Es versteht sich von selbst, dass die dargestellten bevorzugten Ausführungsformen lediglich beispielhaft zu verstehen sind. Auch wenn es beispielsweise besonders praktisch und technisch einfach zu realisieren ist, den Druckbehälter 2 mit einem Deckel 2a von oben zu verschließen, so kann beispielsweise auch seitlich am Druckbehälter 2 eine Tür 2a zum Öffnen und Schließen des Druckbehälters 2 angeordnet sein, wie dies in Figur 4 schematisch dargestellt ist. Selbstverständlich ist auch diese Ausführungsform nicht auf einen rechteckigen Querschnitt beschränkt, sondern kann ebenfalls einen beispielsweise kreisrunden Querschnitt aufweisen. Die Tür kann mittels eines oder mehrerer Scharniere 11 an dem Druckbehälter 2 befestigt sein und sich z.B. mit Hilfe eines Riegels 9 druckdicht verschließen lassen. Diese Ausführungsform hat den Vorteil, dass sich auf einfache Weise mehrere Gitter-Roste 6 übereinander anordnen lassen, so dass eine Vielzahl von Backwaren 7 in dem Druckbehälter aufgenommen werden kann.

Der beheizbare Boden 4 kann auch bei dieser Ausführungsform passiv (über eine Herdplatte) oder aktiv mittels integrierter Heizelemente 14 wie z.B. Heizwendeln oder Induktionsspulen beheizbar sein. In letzterem Fall können eine entsprechende Steuerung sowie ein Stromanschluss vorgesehen sein. Angesichts der Ausmaße der Ausführungsform in Figur 4 kann hier unter Umständen auf einen Spritzschutz verzichtet werden, da die Backwaren in ausreichender Höhe oberhalb des Wasser 8 angeordnet sind.

In Figur 7 sind zwei Beispiele für Gitter-Roste 6 aufgeführt. Bevorzugt sind die Gitterroste aus zwischen 1mm bis 2 mm dickem Stahldraht, welche einen Maschenabstand von 2,5 cm bis 10cm, besonders bevorzugt von 5 cm haben, um einerseits so wenig Berührungspunkte zur Backware zu haben, um Kondensatberührungsflächen auf ein Minimum zu beschränken, und andererseits dennoch engmaschig genug zu sein, um auch kleine Backwaren nicht durch den Rosten fallen zu lassen.

Des Weiteren versteht es sich von selbst, dass das erfindungsgemäße Verfahren nicht auf die hier dargestellte und beschriebene Vorrichtung beschränkt ist. So kann das erfindungsgemäße Verfahren beispielsweise auch großindustriell eingesetzt werden, indem eine Vielzahl von dehydrierten Backwaren z. B. mittels eines Stikkenwagens in das Innere eines entsprechend dimensionierten Druckbehälters eingebracht bzw. hineingefahren werden. In diesem Fall wird vorteilhafterweise der Boden des Druckbehälters nicht mit Wasser bedeckt sein, sondern bevorzugt eine Vorrichtung an oder innerhalb des Druckbehälters vorgesehen sein, mithilfe derer Wasserdampf im Inneren des Druckbehälters erzeugt oder in diesen eingebracht werden kann. Hierbei ist eine Vollautomatisierung des Verfahrens gemäß der Verfahrenstabellen I und II möglich und sinnvoll.

Das erfindungsgemäße Verfahren sowie die erfindungsgemäße Vorrichtung erlauben es, auf einfache Weise dehydrierte Backwaren derart aufzubereiten bzw. zu regenerieren, dass diese wieder in den Lebensmittelkreislauf zurückgeführt werden können. Die Erfindung kann daher wesentlich dazu beitragen, die Vernichtung grundsätzlich noch verzehrfähiger Backwaren zu verhindern bzw. zu vermindern.

### Figur zur Zusammenfassung

| Legende zu den Figuren | |
|---|---|
| Vorrichtung | 1 |
| Druckbehälter | 2 |
| Deckel / Tür des Druckbehälters | 2a |
| Überdruckventil | 3 |
| Boden | 4 |
| Spritzschutz | 5 |
| Gitter-Rost | 6 |
| Backware | 7 |
| Wasser | 8 |
| Riegel / Griff | 9 (a/b) |
| Dichtung/Verschluss | 10 |
| Scharniere | 11 |
| Dampf | 12 |
| Stromkabel | 13 |
| Heizelement | 14 |

## Patentansprüche

1. Verfahren zur Aufbereitung von dehydrierten Backwaren mit den folgenden Schritten:
a) Einbringen einer dehydrierten Backware in das Innere eines Druckbehälters;
b) Luftdichtes Verschließen des Druckbehälters;
c) Einbringen von Wasserdampf in das Innere des Druckbehälters und/oder Erzeugen von Wasserdampf im Inneren des Druckbehälters, wobei der Wasserdampf eine Temperatur von mindestens 100 °C hat; und
d) Erzeugen eines Drucks von mindestens 1,2 bar und von höchstens 1,8 bar im Inneren des Druckbehälters, so dass der Wasserdampf unter Überdruck über einen ersten Zeitraum auf die dehydrierte Backware einwirken kann.

2. Verfahren nach Anspruch 1, mit den zusätzlichen Schritten:
e) Einbringen der Backware in einen Backofen; und
f) Backen der Backware über einen zweiten Zeitraum bei einer Temperatur von mindestens 100 °C und von höchstens 240 °C, bevorzugt von höchstens 220 °C und besonders bevorzugt von höchstens 200 °C, und einer relativen Luftfeuchtigkeit von höchstens 5%, bevorzugt von höchstens 4%, stärker bevorzugt von höchstens 3%, besonders bevorzugt von höchstens 2%.

3. Verfahren nach Anspruch 1, mit den zusätzlichen Schritten:
e) Verringern der Luftfeuchtigkeit im Inneren des Druckbehälters auf höchstens 5%, bevorzugt höchstens 4%, stärker bevorzugt höchstens 3%, besonders bevorzugt höchstens 2%; und
f) Backen der Backware über einen zweiten Zeitraum bei einer Temperatur von mindestens 100 °C und von höchstens 240 °C, bevorzugt von höchstens 220 °C und besonders bevorzugt von höchstens 200 °C.

4. Verfahren nach einem der vorigen Ansprüche, ferner mit den Schritten
g) Bestimmen des Backwarentyps und/oder des relativen Wasserverlustes und/oder des Gewichts der dehydrierten Backware; und
h) Festlegen der Temperatur des Wasserdampfes und/oder des Drucks im Inneren des Druckbehälters und/oder des ersten Zeitraums in Abhängigkeit von dem bestimmten Backwarentyp und/oder dem relativen Wasserverlust und/oder dem Gewicht der dehydrierten Backware.

5. Verfahren nach Anspruch 4, ferner mit dem Schritt: Festlegen der Back-Temperatur und/oder des Drucks im Inneren des Druckbehälters während des Backens und/oder des zweiten Zeitraums in Abhängigkeit von dem bestimmten Backwarentyp und/oder dem relativen Wasserverlust und/oder dem Gewicht der dehydrierten Backware und/oder einem oder mehreren der im Schritt h) festgelegten Parameter.

6. Verfahren nach Anspruch 4 oder 5, wobei das Festlegen durch das Auslesen einer analogen und/oder digitalen Tabelle und/oder automatisch erfolgt.

7. Verfahren nach einem der vorigen Ansprüche wobei ein Druck von mindestens 1,3 bar, bevorzugt mindestens 1,4 bar, besonders bevorzugt mindestens 1,5 bar und/oder ein Druck von höchstens 1,7 bar, bevorzugt höchstens 1,6 bar im Inneren des Druckbehälters erzeugt wird.

8. Verfahren nach einem der vorigen Ansprüche, wobei die Backware im Inneren des Druckbehälters auf einem Gitter-Rost angeordnet ist.

9. Verfahren nach einem der vorigen Ansprüche, wobei Wasserdampf im Inneren des Druckbehälters erzeugt wird, indem ein Wasserbad im Inneren des Druckbehälters erhitzt wird.

10. Vorrichtung zur Aufbereitung von dehydrierten Backwaren mit einem Druckbehälter, der luftdicht verschlossen werden kann und ein Überdruckventil aufweist, wobei der Druckbehälter einen beheizbaren Boden, einen Spritzwasserschutz und einen Gitter-Rost zur Aufnahme einer Backware aufweist.

11. Vorrichtung nach Anspruch 10, wobei die Vorrichtung ein integriertes Heizelement zum Beheizen des Bodens und/oder der Wandung des Druckbehälters und/oder des Deckels des Druckbehälters aufweist.

12. Vorrichtung nach Anspruch 10 oder 11, wobei die maximalen Innenmaße des Druckbehälters in horizontaler Richtung mindestens 30 cm, bevorzugt mindestens 35 cm, besonders bevorzugt mindestens 40 cm betragen.

13. Vorrichtung nach einem der Ansprüche 10 bis 12, wobei sich der Druckbehälter nach oben hin aufweitet, wobei die maximalen Innenmaße des Druckbehälters in horizontaler Richtung bevorzugt mindestens 20%, stärker bevorzugt mindestens 30%, besonders bevorzugt mindestens 50% größer sind als die maximalen Ausmaße des beheizbaren Bodens.

14. Vorrichtung nach einem der Ansprüche 10 bis 13, wobei die Vorrichtung einen Prozessor aufweist, der dazu geeignet ist, einen oder mehrere der Verfahrensparameter gemäß den Ansprüchen 4 und 5 festzulegen, wobei die Vorrichtung bevorzugt ferner eine Eingabeeinrichtung aufweist, die es dem Benutzer erlaubt, den Backwarentyp und/oder den relativen Wasserverlust und/oder das Gewicht der dehydrierten Backware einzugeben.

15. Set mit einer Vorrichtung nach einem der Ansprüche 10 bis 13 und einer Tabelle, die es einem Benutzer erlaubt, einen oder mehrere der Verfahrensparameter gemäß den Ansprüchen 4 und 5 festzulegen.
